(19) Europäisches Patentamt
European Patent Office
Office européen des brevets

(11) Veröffentlichungsnummer: **0 657 519 A1**

# (12) EUROPÄISCHE PATENTANMELDUNG

(21) Anmeldenummer: **94117656.2**

(22) Anmeldetag: **09.11.94**

(51) Int. Cl.[6]: **C09J 171/12**, C08L 71/12, C08K 5/00

(30) Priorität: **09.12.93 DE 4341955**

(43) Veröffentlichungstag der Anmeldung: **14.06.95 Patentblatt 95/24**

(84) Benannte Vertragsstaaten: **BE DE FR GB IT NL**

(71) Anmelder: **HÜLS AKTIENGESELLSCHAFT**
**D-45764 Marl (DE)**

(72) Erfinder: **Schmidt, Friedrich Georg, Dr.**
**Brukterer Strasse 46**
**D-45721 Haltern (DE)**
Erfinder: **Nikutta, Volkhard**
**Philipp-Otto-Runge-Strasse 19**
**D-45768 Marl (DE)**

## (54) Masse zum Verkleben von Polyphenylenether-Formmassen.

(57) Aufgabe war die Entwicklung eines Verfahrens zum Verkleben von Polyphenylenether-Formmassen, bei dem die zu verklebenden Flächen nicht umständlich vorbehandelt werden müssen und bei dem es nicht zu Umweltbelastungen oder Blasen- bzw. Spannungsrißbildung durch flüchtige Lösemittelreste kommt.

Diese Aufgabe wird durch ein Verfahren gelöst, bei dem eine Klebmasse verwendet wird, die folgende Komponenten enthält:

a) 0,1 bis 75 Gew.-Teile einer Mischung aus
   I. 20 bis 100 Gew.-% eines Polyphenylenethers und
   II. 0 bis 80 Gew.-% Polystyrol;
b) 25 bis 99,9 Gew.-Teile eines Weichmachers

sowie, jeweils bezogen auf 100 Gew.-Teile der Komponente a),

c) 0 bis 25 Gew.-Teile einer Schlagzähkomponente und
d) 0 bis 50 Gew.-Teile Füllstoffe bzw. Verstärkungsstoffe, Pigmente, organische Farbstoffe, Antistatika, Stabilisatoren und Verarbeitungshilfsmittel.

Nach diesem Verfahren werden mit allen auf dem Markt befindlichen Formmassen auf Basis von Polyphenylenether Klebstellen mit hohen Festigkeiten erhalten.

EP 0 657 519 A1

Gegenstand der Erfindung sind eine Masse zum Verkleben von Polyphenylenether-Formmassen, die einen Weichmacher sowie Polyphenylenether (PPE) enthält, ein Verfahren zum Verkleben von Polyphenylenether-Formmassen mit Hilfe einer solchen Masse, sowie die Verwendung einer derartigen Masse zum Verkleben von Polyphenylenether-Formmassen.

Als Klebsysteme für Polyphenylenether-Formmassen, die als Hauptkomponenten Polyphenylenether und gegebenenfalls Polystyrol bzw. schlagzähmodifiziertes Polystyrol (HIPS) enthalten, kommen grundsätzlich Lösemittelklebstoffe und Haftkleber in Frage (Kunststoff-Handbuch) Band 3/2 "Technische Polymerblends", Hrsg. Dr. L. Bottenbruch, Carl Hanser Verlag München Wien 1993, S. 128 f). Zum Lösemittelkleben derartiger PPE-Formmassen eignen sich besonders chlorierte Kohlenwasserstoffe, wie Trichlorethylen, Methylenchlorid oder Gemische aus beiden mit oder ohne weitere Lösemittel, wie z. B. Aromaten. Vom Gesundheits- und Umweltschutzstandpunkt her gesehen gibt es allerdings seit Jahren die Forderung, Lösemittelklebstoffe auf dieser Basis nicht mehr zu verwenden. Zudem besteht die Gefahr, daß Lösemittel Spannungsrisse in den verklebten Bauteilen oder Blasen in der Grenzschicht hervorrufen.

Als Haftkleber eignen sich für PPE-Blends Kautschuk-Klebstoffe, Schmelzklebstoffe, Klebstoffe auf der Basis von Epoxidharzen, Silikonharzen, Polyurethanen, Acrylaten und Cyanacrylaten. Die Klebefuge besitzt dann jedoch andere materialspezifische Eigenschaften als die zu verbindenden Formmassen, was häufig unerwünscht ist. Zudem ist es wichtig, zunächst die Verträglichkeit zwischen dem Klebstoffsystem und dem Substrat zu prüfen. Zur Erhöhung der Haftfestigkeit auf PPE-Oberflächen müssen für bestimmte Klebstoffe Primer angewendet werden. Außerdem müssen für optimale Haftfestigkeiten die Fügeflächen frei von Verunreinigungen sein.

Es bestand daher die Aufgabe, eine Klebmasse zum Verkleben von Polyphenylenether-Formmassen zu entwickeln, die mit allen auf dem Markt befindlichen Formmassen auf Basis von PPE Klebstellen mit hohen Festigkeiten ergibt, ohne daß die zu verklebenden Flächen umständlich vorbehandelt werden müssen, und ohne daß es zu Umweltbelastungen oder Blasen- bzw. Spannungsrißbildung durch flüchtige Lösemittelreste kommt.

Diese Aufgabe wurde durch Mischungen gelöst, die folgende Komponenten enthalten:

a) 0,1 bis 75 Gew.-Teile einer Mischung aus
   I. 20 bis 100 Gew.-% eines Polyphenylenethers und
   II. 0 bis 80 Gew.-% Polystyrol;
b) 25 bis 99,9 Gew.-Teile eines Weichmachers

sowie, jeweils bezogen auf 100 Gew.-Teile der Komponente a),

c) 0 bis 25 Gew.-Teile einer Schlagzähkomponente und
d) 0 bis 50 Gew.-Teile Füllstoffe bzw. Verstärkungsstoffe, Pigmente, organische Farbstoffe, Antistatika, Stabilisatoren und Verarbeitungshilfsmittel.

In einer bevorzugten Ausführungsform beträgt der Weichmachergehalt der Klebmasse mindestens 50 Gew.-%; besonders bevorzugt ist ein Weichmachergehalt von mindestens 70 Gew.-%. Die gestellten Anforderungen werden besonders gut von Klebmassen erfüllt, die einen Weichmachergehalt von 50 bis 85 Gew.-% und insbesondere von 70 bis 80 Gew.-% aufweisen.

Der Polyphenylenether (PPE) ist im wesentlichen aus Einheiten der Formel

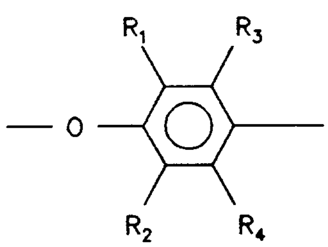

aufgebaut, wobei $R_1$ und $R_2$ entweder für eine n-Alkylgruppe mit bis zu 6 C-Atomen stehen oder $R_1$ Wasserstoff und $R_2$ einen tertiären Alkylrest mit bis zu 6 C-Atomen bedeutet; $R_3$ und $R_4$ stehen, unabhängig voneinander, für eine Methylgruppe oder Wasserstoff.

In einer bevorzugten Ausführungsform ist $R_1 = R_2 = CH_3$ sowie $R_3 = R_4 = H$.

Diese Polyphenylenether können nach jedem dem Stand der Technik entsprechenden Verfahren aus den entsprechenden Phenolen oder 4-Halogenphenolen hergestellt werden. Üblicherweise werden als Katalysatoren Kupfer-Amin-Komplexe oder manganhaltige Systeme benutzt (vgl. DE-OSS 32 24 692 und 32 24 691 sowie US-PSS 3 306 874, 3 306 875 und 4 028 341).

Die Viskositätszahlen, bestimmt nach DIN 53 728 in Trichlormethan bei 25 °C, liegen im Bereich von 30 bis 100 ml/g (J-Wert nach DIN 53 728; Konzentration 5 g/l). Bevorzugt sind Polyphenylenether mit einer Viskositätszahl von 40 bis 70 ml/g.

Mit umfaßt werden natürlich auch modifizierte Polyphenylenether, z. B. Pfropfcopolymere mit Vinylmonomeren, Styrol oder anderen Modifizierungsreagenzien.

Die Polyphenylenether werden üblicherweise als Pulver oder Granulat eingesetzt.

Prinzipiell kann jeder Weichmacher verwendet werden, der bei PPE-Formmassen üblich ist. Er muß nur die Voraussetzungen erfüllen, daß er einerseits so hoch siedet, daß er beim Herstellen der Klebeverbindung nicht verdampft, und andererseits mit PPE-Formmassen so kompatibel ist, daß er dabei unter dem Einfluß von Druck und erhöhter Temperatur in die Formmasse diffundieren kann.

Beispielsweise kommen folgende Weichmacher infrage, ohne hiermit eine Beschränkung vorzunehmen:

1. Benzyltoluole, Dibenzyltoluole und deren Derivate;
2. Aromatische und insbesondere hocharomatische Öle, wie sie beispielsweise in W. Hofmann, "Kautschuk-Technologie", Gentner Verlag Stuttgart, 1980, S. 354 ff. beschrieben sind;
3. Triarylphosphate und gemischte Tri(alkyl/aryl)phosphate, wie z. B. Triphenylphosphat, Diphenylkresylphosphat oder Dodecyldiphenylphosphat;
4. Oligomere des Styrols mit einem Molekulargewicht $M_w$ von maximal 1 000;
5. Niedermolekulares PPE mit einem Molekulargewicht $M_w$ von maximal 1 000;
6. Ester bzw. Amide von aliphatischen bzw. aromatischen Di- bzw. Trisäuren, wie beispielsweise Dioctylphthalat, Trimellithsäuretributylester oder Adipinsäurebistolylamid.

Die Stoffklassen 1., 2., 4. und 5. eignen sich wegen des Fehlens polarer Gruppen insbesondere für Anwendungen in der Mikrowellentechnik, wo eine möglichst geringe Ankopplung im Mikrowellenfeld gefordert wird.

Als Weichmacher besonders geeignet sind, insbesondere wegen ihrer hohen Siedepunkte und ihrer physiologischen Unbedenklichkeit, Benzyltoluolderivate der allgemeinen Formel

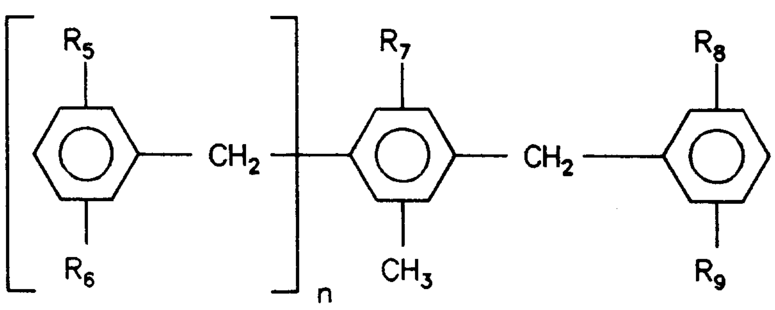

wobei die Reste $R_5$ bis $R_9$ unabhängig voneinander Wasserstoffatome, Alkylgruppen mit 1 bis 8 C-Atomen, Cycloalkylgruppen mit 5 oder 6 C-Atomen oder Arylgruppen mit 6 bis 10 C-Atomen darstellen; n kann 0 oder 1 bedeuten. Die Dibenzyltoluole können z. B. nach dem in der deutschen Patentschrift 10 85 877 beschriebenen Verfahren erhalten werden. Sie stellen im allgemeinen Isomerengemische dar, die in dieser Form eingesetzt werden können. Derartige Produkte sind unter der Bezeichnung MARLOTHERM® im Handel erhältlich (Hersteller: HÜLS AKTIENGESELLSCHAFT, D-45764 Marl).

Als Polystyrol-Komponente werden sowohl Styrolhomopolymerisate als auch schlagzähmodifizierte Styrolpolymerisate eingesetzt. Als monovinylaromatische Verbindungen kommen dabei insbesondere Styrol in Betracht, ferner die kern- oder seitenalkylierten Styrole. Vorzugsweise wird jedoch allein Styrol verwendet. Die Homopolymerisate werden dabei nach den bekannten Verfahren in Masse, Lösung oder Suspension hergestellt (vgl. Ullmann's Encyclopädie der technischen Chemie, Band 19, Seite 265, Verlag Chemie, Weinheim 1980). Die Homopolymerisate können Molekulargewichtsmittel (Mv) von 1 000 bis 250 000 aufweisen. Die meist angewandten Verfahren zur Herstellung schlagzähmodifizierter Styrolpolymerisate sind die Polymerisation in Masse oder Lösung und Verfahren zur Masse-Suspensionspolymerisation, wie sie z. B. in den US-PSS 2 694 692 und 2 862 906 beschrieben werden; selbstverständlich sind aber auch alle anderen bekannten Verfahren anwendbar.

Als Kautschuke in den schlagzähmodifizierten Styrolpolymerisaten werden hierbei die üblicherweise für die Schlagzähmodifizierung von Styrolpolymerisaten gebräuchlichen natürlichen oder synthetischen Kautschuke eingesetzt. Geeignet sind z. B. Naturkautschuk, Polybutadien, Polyisopren und Mischpolymerisate, z. B. statistische, sequentielle oder Blockcopolymere des Butadiens und/oder Isoprens mit Styrol und

anderen Comonomeren, die eine Glastemperatur unter - 20 °C besitzen. Besonders geeignet sind Butadien-Polymerisate mit einem 1,4-cis-Gehalt, der zwischen 25 und 99 % liegt. Es können aber auch Acrylatkautschuke, EPDM-, Polybutylen- oder Polyoctenamerkautschuke eingesetzt werden. Die schlagzähmodifizierten Styrolpolymerisate besitzen einen Weichkomponentenanteil von 10 bis 60 Gewichtsprozent, vorzugsweise von 20 bis 45 Gewichtsprozent. Die Teilchengröße der Weichkomponente sollte im Bereich von 0,2 bis 8 µm liegen.

Darüber hinaus kann die Polystyrol-Komponente auch geringere Anteile anderer Monomere, wie z. B. Maleinsäureanhydrid, Maleinsäureimide, Methylmethacrylat oder Acrylnitril, einpolymerisiert enthalten. Die Obergrenze des Gehalts an diesen Comonomeren ist dadurch festgelegt, daß die Polystyrol-Komponente mit der PPE-Komponente verträglich sein muß.

Als Schlagzähkomponente sind z. B. die in den DE-ASS 19 32 234, 20 00 118, DE-OSS 22 55 930, 27 50 515, 24 34 848, 30 38 551, EP-A-0 080 666 und WO-A-83/01 254 beschriebenen unterschiedlich aufgebauten, vornehmlich aus vinylaromatischen und konjugierten Dienblöcken bestehenden Blockcopolymerisate geeignet. Es können aber auch andere schlagzähmodifizierende Zusätze, wie Polyoctenylen, Pfropf- oder Blockcopolymere aus vinylaromatischen Monomeren und EP(D)M, Acrylatkautschuke oder Gemische aus SBR-Kautschuken mit hohen und niedrigen Styrolgehalten, verwendet werden.

Die hier verwendeten Polyoctenylene werden durch ringöffnende bzw. ringerweiternde Polymerisation von Cycloocten hergestellt (siehe z. B. A. Dräxler, Kautschuk und Gummi, Kunststoffe 1981, Seiten 185 bis 190). Polyoctenylene mit unterschiedlichen Anteilen an cis- und trans-Doppelbindungen sowie unterschiedlichen J-Werten und dementsprechend unterschiedlichen Molekulargewichten sind nach literaturbekannten Methoden erhältlich. Bevorzugt werden Polyoctenylene mit einer Viskositätszahl von 50 bis 350 $cm^3/g$, vorzugsweise 80 bis 160 $cm^3/g$, bestimmt an einer 0,1 %igen Lösung in Toluol. 55 bis 95 %, vorzugsweise 75 bis 85 %, ihrer Doppelbindungen liegen in der trans-Form vor.

Als Stabilisatoren können organische Phosphite, wie z. B. Didecylphenylphosphit oder Trilaurylphosphit, sterisch gehinderte Phenole, Tetramethylpiperidin-, Benzophenon- und Triazolderivate sowie Stabilisatoren auf Basis gehinderter Amine, sogenannte HALS-Verbindungen eingesetzt werden. Als Verarbeitungs- bzw. Entformungshilfsmittel eignen sich beispielsweise Polyethylen oder Wachse, wie z. B. oxidierte Kohlenwasserstoffe sowie ihre Ester- oder Amidderivate oder ihre Alkali- oder Erdalkalisalze.

Die einzelnen Komponenten werden in bekannter Weise entweder im Batchbetrieb oder kontinuierlich in der Schmelze gemischt. Für das Schmelzen und Vermischen eignen sich die üblichen Geräte zur Behandlung von hochviskosen Schmelzen. Besonders geeignet sind Doppelschneckenkneter und Kokneter. Es kann beispielsweise ein kontinuierlich arbeitender, gleichsinnig drehender Zweiwellenkneter verwendet werden. Die Schmelzetemperatur liegt hierbei zwischen 250 und 350 °C, vorzugsweise zwischen 270 und 320 °C. Eine gleichzeitige Entgasung der Schmelze ist zweckmäßig. Der Weichmacher kann hierbei bereits in dieser Stufe oder auch erst anschließend zugemischt werden.

Bei hohem Anteil (> 35 %) der Polymerkomponente in der Klebmasse kann diese als Heißklebsystem verwendet werden.

In anderen Fällen wird die Verklebung vorteilhafterweise so durchgeführt, daß die Klebestelle unter Anwendung eines Anpreßdrucks während eines Zeitraums von 2 Minuten bis 4 Stunden auf einer Temperatur von 10 °C bis unterhalb der Erweichungstemperatur der PPE-Formmasse gehalten wird.

Die erfindungsgemäße Klebmasse eignet sich zum Verkleben aller Formmassen auf Basis von Polyphenylenethern und ggf. PS bzw. HIPS. Der Terminus "auf Basis von" bedeutet hierbei, daß bei derartigen Formmassen, die häufig noch dritte Polymerkomponenten aufweisen, eine kontinuierliche Phase vorliegt, die durch PPE, ggf. in Mischung mit Polystyrol, gebildet wird. Der PPE-Anteil in derartigen Formmassen sollte mindestens 10 Gew.-%, bevorzugt mindestens 20 Gew.-% betragen.

Beispiele

Durch Dispergieren und Lösen von reinem Polyphenylenether bzw. einer Polyphenylenether-Formmasse in Marlotherm S bzw. Marlotherm L (Benzyltoluolderivate) wurden folgende Mischungen hergestellt:

Mischung A:

Es wurden 20 g reiner Polyphenylenether mit einer Viskositätszahl von 65 ml/g in 80 g Marlotherm S (HÜLS AG, D-45764 Marl) bei 180 °C innerhalb von 2 Stunden aufgelöst.

Mischung B:

Es wurden 30 g reiner Polyphenylenether mit einer Viskositätszahl von 65 ml/g in 70 g Marlotherm S (HÜLS AG, D-45764 Marl) bei 180 °C innerhalb von 2 Stunden aufgelöst.

Mischung C:

Es wurden 20 g reiner Polyphenylenether mit einer Viskositätszahl von 65 ml/g in 80 g Marlotherm L (HÜLS AG, D-45764 Marl) bei 180 °C innerhalb von 2 Stunden aufgelöst.

Mischung D:

Es wurden 20 g VESTORAN 1300 schwarz (HÜLS AG, D-45764 Marl) in 80 Marlotherm L (HÜLS AG, D-45764 Marl) bei 150 °C innerhalb von 2 Stunden aufgelöst.

Mischung E:

Es wurden 10 g reiner Polyphenylenether mit einer Viskositätszahl von 65 ml/g in 90 g Marlotherm S (HÜLS AG, D-45764 Marl) bei 150 °C innerhalb von 2 Stunden aufgelöst.

Mischung F:

Es wurden 10 g reiner Polyphenylenether mit einer Viskositätszahl von 65 ml/g in 90 g Marlotherm L (HÜLS AG, D-45764 Marl) bei 150 °C innerhalb von 2 Stunden aufgelöst.

Mischung G:

Es wurden 30 g reiner Polyphenylenether mit einer Viskositätszahl von 65 ml/g in 70 g Marlotherm L (HÜLS AG, D-45764 Marl) bei 150 °C innerhalb von 2 Stunden aufgelöst.

Die Herstellung der Probekörper zum Test der Klebkraft erfolgte im Spritzgießverfahren bei Temperaturen zwischen 300 und 320 °C aus VESTORAN 1900 naturfarben (I) bzw. VESTORAN X4890 grau (II), zwei Polyphenylenetherformmassen der Hüls AG, 45764 Marl. Es wurden Zugprüfkörper nach DIN 53 455 hergestellt.

Zur Herstellung der Klebverbindungen wurden jeweils 0,12 g der Mischungen A bis E mit einem Rakel einseitig auf eine Seite eines Probekörpers aufgebracht, und nach VDI-Richtlinie 3821 (Klebstoffvorbereitung) mit einem zweiten Probekörper bei den im folgenden aufgeführten Temperaturen und Drücken eine definierte Zeit verpreßt. Die Prüfung erfolgte in Anlehnung an DIN 52 283. Die Prüfgeschwindigkeit betrug 50 mm/min.

Tabelle 1

| Beispiel | Mischung | Formmasse | Klebe-Temperatur [°C] | Klebedruck [N/mm²] | Klebezeit [min] | Zugscherfestigkeit [N/mm²] |
|---|---|---|---|---|---|---|
| 1 | A | I | 180 | 0,08 | 20 | 4,0 |
| 2 | A | I | 180 | 0,08 | 15 | 3,1 |
| 3 | A | I | 180 | 0,08 | 10 | 2,4 |
| 4 | A | I | 180 | 0,08 | 5 | 1,2 |
| 5 | C | I | 180 | 0,08 | 20 | 4,0 |
| 6 | C | I | 180 | 0,08 | 15 | 4,0 |
| 7 | C | I | 180 | 0,08 | 10 | 3,4 |
| 8 | C | I | 180 | 0,08 | 5 | 3,1 |
| 9 | E | II | 120 | 0,08 | 30 | 2,1 |
| 10 | A | II | 120 | 0,08 | 60 | 2,5 |
| 11 | B | II | 120 | 0,08 | 30 | 2,3 |
| 12 | B | II | 120 | 0,08 | 60 | 2,7 |
| 13 | F | II | 120 | 0,08 | 30 | 2,8 |
| 14 | C | II | 120 | 0,08 | 60 | 2,6 |
| 15 | G | II | 120 | 0,08 | 30 | 2,3 |
| 16 | G | II | 120 | 0,08 | 60 | 2,7 |
| 17 | C | II | 120 | 0,08 | 20 | 2,5 |
| 18 | C | II | 120 | 0,08 | 15 | 2,5 |
| 19 | C | II | 120 | 0,08 | 10 | 1,9 |
| 20 | C | II | 120 | 0,08 | 5 | 1,6 |

Tabelle 1 (Fortsetzung)

| Beispiel | Mischung | Formmasse | Klebe-Temperatur [°C] | Klebedruck [N/mm²] | Klebezeit [min] | Zugscherfestigkeit [N/mm²] |
|---|---|---|---|---|---|---|
| 21 | A | II | 120 | 0,08 | 20 | 2,5 |
| 22 | A | II | 120 | 0,08 | 15 | 2,2 |
| 23 | A | II | 120 | 0,08 | 10 | 2,0 |
| 24 | A | II | 120 | 0,08 | 5 | 1,5 |
| 25 | F | I | 180 | 0,08 | 60 | 4,0 |
| 26 | F | I | 180 | 0,08 | 30 | 4,0 |
| 27 | C | I | 180 | 0,08 | 60 | 4,1 |
| 28 | C | I | 180 | 0,08 | 30 | 3,7 |
| 29 | G | I | 180 | 0,08 | 60 | 4,0 |
| 30 | G | I | 180 | 0,08 | 30 | 4,0 |
| 31 | E | I | 180 | 0,08 | 60 | 3,1 |
| 32 | E | I | 180 | 0,08 | 30 | 2,4 |
| 33 | A | I | 180 | 0,08 | 60 | 4,0 |
| 34 | A | I | 180 | 0,08 | 30 | 4,0 |
| 35 | B | I | 180 | 0,08 | 60 | 4,0 |
| 36 | B | I | 180 | 0,08 | 30 | 4,0 |
| 37 | D | II | 120 | 0,08 | 60 | 2,6 |
| 38 | D | II | 120 | 0,08 | 30 | 2,2 |

**Patentansprüche**

**1.** Verfahren zum Verkleben von Polyphenylenether-Formmassen, wobei eine Klebmasse verwendet wird, die folgende Komponenten enthält:

a) 0,1 bis 75 Gew.-Teile einer Mischung aus

I. 20 bis 100 Gew.-% eines Polyphenylenethers und

II. 0 bis 80 Gew.-% Polystyrol;

b) 25 bis 99,9 Gew.-Teile eines Weichmachers

sowie, jeweils bezogen auf 100 Gew.-Teile der Komponente a),

c) 0 bis 25 Gew.-Teile einer Schlagzähkomponente und
d) 0 bis 50 Gew.-Teile Füllstoffe bzw. Verstärkungsstoffe, Pigmente, organische Farbstoffe, Antistatika, Stabilisatoren und Verarbeitungshilfsmittel.

**2.** Verfahren gemäß Anspruch 1,
dadurch gekennzeichnet,
daß der Weichmachergehalt der Klebmasse mindestens 50 Gew.-% und bevorzugt mindestens 70 Gew.-% beträgt.

**3.** Verfahren gemäß Anspruch 2,
dadurch gekennzeichnet,
daß der Weichmachergehalt der Klebmasse 50 bis 85 Gew.-% und bevorzugt 70 bis 80 Gew.-% beträgt.

**4.** Verfahren gemäß einem der vorhergehenden Ansprüche,
dadurch gekennzeichnet,
daß der Weichmacher aus folgenden Substanzklassen ausgewählt wird:
1) Benzyltoluole, Dibenzyltoluole und deren Derivate;
2) Aromatische und insbesondere hocharomatische Öle;
3) Triarylphosphate und gemischte Tri(alkyl/aryl)phosphate;
4) Oligomere des Styrols mit einem Molekulargewicht $M_w$ von maximal 1 000;
5) Niedermolekulares PPE mit einem Molekulargewicht $M_w$ von maximal 1 000 und
6) Ester bzw. Amide von aliphatischen bzw. aromatischen Di- bzw. Trisäuren.

**5.** Verfahren gemäß Anspruch 4,
dadurch gekennzeichnet,
daß der Weichmacher ein Benzyltoluol der Formel

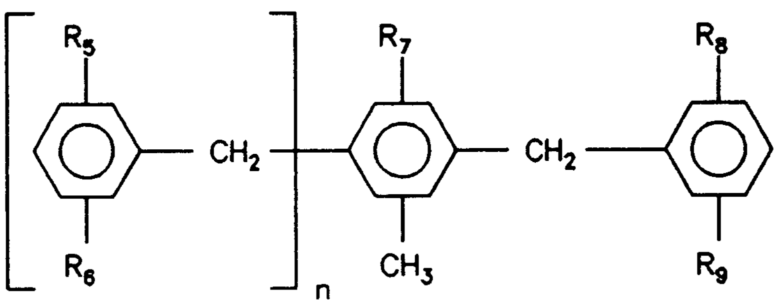

ist, wobei die Reste $R_5$ bis $R_9$ unabhängig voneinander Wasserstoffatome, Alkylgruppen mit 1 bis 8 C-Atomen, Cycloalkylgruppen mit 5 oder 6 C-Atomen oder Arylgruppen mit 6 bis 10 C-Atomen darstellen und n die Zahlen 0 oder 1 bedeutet.

**6.** Verwendung einer Masse, die folgende Komponenten enthält:
a) 0,1 bis 75 Gew.-Teile einer Mischung aus
I. 20 bis 100 Gew.-% eines Polyphenylenethers und
II. 0 bis 80 Gew.-% Polystyrol;
b) 25 bis 99,9 Gew.-Teile eines Weichmachers
sowie, jeweils bezogen auf 100 Gew.-Teile der Komponente a),
c) 0 bis 25 Gew.-Teile einer Schlagzähkomponente und
d) 0 bis 50 Gew.-Teile Füllstoffe bzw. Verstärkungsstoffe, Pigmente, organische Farbstoffe, Antistatika, Stabilisatoren und Verarbeitungshilfsmittel
zum Verkleben von Polyphenylenether-Formmassen.

**7.** Masse zum Verkleben vom Polyphenylenether-Formmassen, die folgende Komponente enthält:
a) 0,1 bis 75 Gew.-Teile einer Mischung aus
I. 20 bis 100 Gew.-% eines Polyphenylenethers und
II. 0 bis 80 Gew.-% Polystyrol;

b) 25 bis 99,9 Gew.-Teile eines Weichmachers
sowie, jeweils bezogen auf 100 Gew.-Teile der Komponente a),
c) 0 bis 25 Gew.-Teile einer Schlagzähkomponente und
d) 0 bis 50 Gew.-Teile Füllstoffe bzw. Verstärkungsstoffe, Pigmente, organische Farbstoffe, Antistatika, Stabilisatoren und Verarbeitungshilfsmittel
dadurch gekennzeichnet,
daß der Weichmachergehalt dieser Klebmasse mindestens 50 Gew.-% und bevorzugt mindestens 70 Gew.-% beträgt.

**8.** Masse gemäß Anspruch 7,
dadurch gekennzeichnet,
daß der Weichmachergehalt 50 bis 85 Gew.-% und bevorzugt 70 bis 80 Gew.-% beträgt.

Europäisches Patentamt

# EUROPÄISCHER RECHERCHENBERICHT

Nummer der Anmeldung
EP 94 11 7656

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | DE-A-16 94 310 (GENERAL ELECTRIC CO.)<br>* Ansprüche 1,2 *<br>--- | 7,8 | C09J171/12<br>C08L71/12<br>C08K5/00 |
| X | US-A-4 318 836 (VISVALDIS ABOLINS)<br>* Ansprüche 1,7 *<br>* Spalte 3, Zeile 33 - Zeile 40 *<br>--- | 7,8 | |
| A | EP-A-0 382 930 (HÜLS AG.)<br>* Anspruch 1 *<br>--- | 1-8 | |
| A | EP-A-0 491 188 (GENERAL ELECTRIC CO.)<br>* Anspruch 1 *<br>--- | 1-8 | |
| A | NL-A-6 701 486 (DYNAMIT NOBEL AG)<br>* Anspruch 1 *<br>* Seite 2, Zeile 18 - Zeile 25 *<br>----- | 1-8 | |

RECHERCHIERTE SACHGEBIETE (Int.Cl.6)
C08L
C08K
C09J

Der vorliegende Recherchenbericht wurde für alle Patentansprüche erstellt

| Recherchenort | Abschlußdatum der Recherche | Prüfer |
|---|---|---|
| DEN HAAG | 13. März 1995 | O'Sullivan, T |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)